Europäisches Patentamt

European Patent Office

Office européen des brevets

(11) Veröffentlichungsnummer : **0 120 246**
**B1**

# (12) EUROPÄISCHE PATENTSCHRIFT

(45) Veröffentlichungstag der Patentschrift :
18.06.86

(21) Anmeldenummer : 84101319.6

(22) Anmeldetag : 09.02.84

(51) Int. Cl.⁴ : **B 23 D 15/00**

(54) **Schere für Material beliebiger Art.**

(30) Priorität : 25.03.83 DE 3310894

(43) Veröffentlichungstag der Anmeldung :
03.10.84 Patentblatt 84/40

(45) Bekanntmachung des Hinweises auf die Patenterteilung : 18.06.86 Patentblatt 86/25

(84) Benannte Vertragsstaaten :
AT BE CH DE FR GB IT LI LU NL SE

(56) Entgegenhaltungen :
AT-B-   290 996
DE-A- 2 245 049

(73) Patentinhaber : **Lindemann Maschinenfabrik GmbH**
**Erkrather Strasse 401**
**D-4000 Düsseldorf 1 (DE)**

(72) Erfinder : **Marx, Helmut**
**Wildenbruchstrasse 82**
**D-4000 Düsseldorf (DE)**

(74) Vertreter : **Bergen, Klaus, Dipl.-Ing. et al**
**Patentanwälte Dr.-Ing. Reimar König Dipl.-Ing. Klaus**
**Bergen Wilhelm-Tell-Strasse 14 Postfach 260162**
**D-4000 Düsseldorf 1 (DE)**

EP 0 120 246 B1

## Beschreibung

Die Erfindung betrifft eine Schere für Material beliebiger Art, zum Beispiel Schrott, Schutt, Müll, Knüppel, Stränge und dgl., mit in einem geschlossenen Rahmen geführtem Messerschlitten und ggf. Niederhalter sowie je einem zugehörigen, aus einer in einer Bohrung des zylinderseitigen Rahmen-Querhaupts unter Vorspannung fixierten Zylinder-Kolben-Anordnung bestehenden Antrieb.

Im Querhaupt beispielsweise einer vertikal stehenden Schere werden in aller Regel nebeneinander zwei Antriebszylinder untergebracht, von denen der eine über seinen Kolben mit dem Hauptmesser verbunden ist und der andere den Antrieb des sogenannten Niederhalters bildet, welcher das zu schneidende Material während des Schneidegangs niederhält bzw. festlegt. Der dem Niederhalter zugeordnete Zylinder ist wegen der geringeren aufzubringenden Kraft wesentlich kleiner als der andere, als Scherzylinder bezeichnete Antrieb. Abgesehen von der Größe unterscheiden sich die Zylinder im Prinzip nicht. Die nachfolgende Beschreibung gilt daher gleichermaßen für den Scherzylinder und den Niederhalterzylinder, auch dann, wenn nur vom Scherzylinder die Rede ist.

Die im Querhaupt fixierten Zylinder sind zwei in ihrer Achsrichtung verlaufenden Kräften ausgesetzt. Normalerweise wirkt nur das Gewicht der Antriebseinheiten nebst Zubehör. Dies wird über eine am Zylinder umlaufende Schulter vom Rand der Bohrung des Querhaupts aufgenommen. Zum Abfangen der wesentlich größeren, von unten nach oben wirkenden Scherkraft dient bei bekannten Scheren ein Gewindering, der nach dem Einsetzen des Zylinders in die Querhauptbohrung von unten auf den Zylinder aufgeschoben und auf ein dort vorhandenes Gewinde geschraubt wird. Die erheblichen · Scherkräfte werden also vom Zylinder über das Gewinde und den Gewindering auf das Querhaupt übertragen. Um jedes Spiel in Zylinderachsrichtung zwischen Zylinder und Querhaupt auszuschließen und ein Lösen des Gewinderings zu verhindern, wird dieser mit einem Spannsystem unter Vorspannung gehalten.

Aufgrund der mit dem Schervorgang verbundenen betrieblichen Wechselbelastung durch den Scherdruck einerseits und die plötzliche Entlastung nach dem Durchscheren andererseits wird das Gewinde des den Zylinder haltenden Gewinderings festigkeitsmäßig so stark beansprucht, daß es nach einiger Betriebsdauer zur Beschädigung des Gewindes sowohl am Gewindering als auch am Zylinder kommt. Dadurch verringert sich die Vorspannung des Gewinderings bis zum Wegfall, und die abwechselnd entgegengesetzt auf den Zylinder wirkenden, erheblichen Kräfte führen schließlich zu einer Auf- und Abbewegung des Zylinders in der Größenordnung von Millimetern.

Da entsprechende Reparaturen wegen des ohnehin rauher Betriebs an einer Schere eingangs genannter Art meist nicht sofort veranlaßt werden, kommt es infolge der Hunderte von Tonnen betragenden, auf den Gewindering wirkenden Kräfte dazu, daß sich der Gewindering in die angrenzende Fläche des Querhaupts einarbeitet. Diese Verbindung wird schließlich durch Deformation zwischen Gewindering und Zylinder so stark am Querhaupt verkeilt, daß der Zylinder zum Herstellen eines neuen Gewindes zu demontieren ist. Zu diesem Zweck muß der Gewindering abgebrannt werden, so daß auch ein neuer Gewindering beschafft werden muß. Ferner ist eine Reparatur der die Querhauptbohrung umgebenden Fläche erforderlich, in die sich der Gewindering eingearbeitet hatte. Diese Arbeiten sind aufwendig und erfordern einen Betriebsausfall von etwa vier Wochen.

Der Erfindung liegt die Aufgabe zugrunde, eine weniger empfindliche Befestigung für die in Rede stehenden Zylinder zu schaffen und die Montage und Demontage des Scherzylinders und/oder Stampferzylinders einer für Material beliebiger Art, insbesondere Schrott, geeigneten Schere bei mindestens gleicher Betriebssicherheit und Standzeit zu vereinfachen. Die erfindungsgemäße Lösung besteht bei der eingangs genannten Schere darin, daß jeder im Querhaupt fixierte Zylinder gegenüber vom Messerschlitten zum Querhaupt gerichteten Kräften durch einen teilweise in eine umlaufende Ausnehmung der Zylinderoberfläche sowie wenigstens zum Teil in die dem Messerschlitten zugewandte Querhauptseite eingreifenden, ersten geteilten Ring an der dem Messerschlitten zugewandten Seite des Querhaupts fest abgestützt ist und daß der Zylinder auf der dem Messerschlitten abgewandten Seite des Querhaupts unter Vorspannung festgelegt ist.

Durch diese Lösung wird die die Vorspannung aufnehmende Endbefestigung des Zylinders von den bei Betrieb der Schere auftretenden hohen Kräften entlastet, außerdem befinden sich die Befestigungsmittel an einer für die Montage und Demontage erheblich besser zugänglichen Stelle als bei derzeit verwendeten Scheren. Besonders bei vertikal stehenden Scheren bietet die Erfindung besondere Vorteile, da eine Montage nunmehr im wesentlichen ohne Über-Kopf-Arbeiten auszuführen ist.

Vorzugsweise wird der Zylinder an der dem Messerschlitten abgewandten Seite des Querhaupts mit Hilfe eines auf den Zylinderumfang aufgeschraubten Gewinderings oder eines in eine weitere umlaufende Ausnehmung der Zylinderoberfläche eingreifenden, zweiten geteilten Rings abgestützt.

Demgemäß basiert die Erfindung im Prinzip darauf, an der Stelle des den Gewindering bisher aufnehmenden Gewindes in die Außenfläche des Zylinders eine ringförmig umlaufende Ausnehmung bzw. Nut anzubringen und den mit Zentrieransatz versehenen Gewindering durch einen gewindelosen, ersten geteilten, insbesondere hälftig geteilten, Ring zu ersetzen, der in die Ausnehmung eingepaßt wird und zum Aufnehmen der Reaktionskräfte beim Scheren mit seiner dem Querhaupt zugewandten Stirnfläche ausreichend weit radial über den Rand der den Scherzylinder aufnehmenden Bohrung nach außen hin übersteht sowie mit seiner dem Messerschlitten zugewandten Stirnfläche auf der die Ausnehmung begrenzenden Schulter bzw. dem dadurch gebildeten Bund am Ende des Zylinders abgestützt wird. Die Ausnehmung muß also so tief eingeschnitten sein, daß der sich daran anschließende Bund des Zylinders die gesamte Schergegenkraft aufnehmen kann. Mit der Erfindung wird somit erreicht, daß die genannte Schulter der Ausnehmung bzw. der sich daran anschließende Bund des Zylinders das bisher an dieser Stelle notwendige Gewinde ersetzt.

Um den ersten geteilten Ring in seiner Position zu fixieren, wird die zugehörige Ausnehmung so in die Zylinderoberfläche eingebracht, daß sie in der fixierten Zylinderposition wenigstens teilweise in die Bohrung des Querhaupts hineinreicht. Im unteren Teil der Bohrung des Querhaupts kann ebenfalls eine umlaufende Ausnehmung vorgesehen werden, die die radial über die Zylinderoberfläche überstehenden Teile des geteilten Rings aufnimmt, so daß die Querhauptbohrung quasi abgestuft ausgebildet wird. Auf diese Weise kann der erste geteilte Ring in der vorgespannten Position des Zylinders auch ganz im Querhaupt versenkt werden. Durch das teilweise oder vollständige Versenken des ersten geteilten Rings in der Bohrung des Querhaupts wird der geteilte Ring in radialer Richtung fixiert. Vorzugsweise besitzt der erste geteilte Ring wenigstens einen in die Bohrung hineinreichenden Zentrieransatz, dessen maximaler Durchmesser gleich dem Durchmesser des Zylinders ist. Es genügt dann, die Ausnehmung in der Zylinderoberfläche so zu bemessen, daß der Zentrieransatz bei vorgespanntem Zylinder in die Querhauptbohrung hineinreicht.

Zum Aufnehmen des Zylindergewichts und zum Vorspannen des Zylinders gegen das aus dem ersten geteilten Ring gebildete Widerlager dient vorzugsweise ein auf der dem Messerschlitten abgewandten Seite des Querhaupts auf ein Gewinde am Zylinderumfang geschraubter Gewindering. Dieser Gewindering kann mit seiner Stirnfläche flach auf das Querhaupt im Bereich des Umfangs der den Zylinder aufnehmenden Bohrung aufliegen. Da der Gewindering auf dieser Seite des Querhaupts wesentlich geringere Kräfte aufnehmen muß als der bisher auf der dem Messerschlitten zugewandten Seite des Querhaupts vorgesehene Gewindering, kann er entsprechend schwächer ausgelegt werden. Eine Zentrierung im Bereich dieses Gewinderings wird durch eine der Bohrung entsprechende Passung am Zylinderumfang erreicht. An die Stelle einer solchen Passung am Zylinderumfang kann aber auch ein in die Bohrung des Querhaupts vorspringender Zentrieransatz des Gewinderings treten.

Zum Festlegen des Zylinders auf der dem Messerschlitten abgewandten Seite des Querhaupts können anstelle des Gewinderings auch andere Mittel eingesetzt werden. Beispielsweise kann die die Vorspannung erzeugende Endbefestigung des Zylinders auf der dem Messerschlitten abgewandten Seite des Querhaupts durch den vorgenannten zweiten geteilten Ring gebildet werden. Dieser zweite geteilte Ring kann ebenfalls in eine umlaufende Ausnehmung der Zylinderoberfläche eingreifen. Vorzugsweise wird der zweite geteilte Ring mit Hilfe eines einteiligen Bandagerings zusammengehalten. Die Montage des zweiten geteilten Rings soll unter Vorspanndruck mittels radial einzutreibender Keile erfolgen. Die Keile werden zweckmäßig mit Hilfe einer Schweißnaht festgelegt, um ein Lösen oder Lockern auszuschließen. Da sich die erfindungsgemäße Verbindung bei sachgemäßer Montage nicht lösen kann, ist eine Nachspannmöglichkeit nicht erforderlich und das Verschweißen der Keile bildet keinen Nachteil.

Beispielsweise wird bei einer vertikal stehenden Schere zum Montieren des Scherzylinders oder Niederhalterzylinders der jeweilige Zylinder erfindungsgemäß von oben in die vorgesehene Bohrung des Querhaupts eingesetzt. Hierzu wird das beispielsweise als Gewindering ausgebildete Widerlager auf der Oberseite des Querhaupts soweit von der endgültigen Position nach oben geschraubt, daß der geteilte Ring auf der Unterseite des Querhaupts problemlos in die dafür vorgesehene Ausnehmung an der Zylinderoberfläche einzulegen ist. Der Zylinder wird dann zunächst, z. B. mit dem zum Einsetzen benutzten Kran, leicht angehoben, so daß der Gewindering auf der Querhauptoberseite provisorisch anzuziehen ist. Wenn die vorgenannten räumlichen Zuordnungen von Ausnehmung, geteiltem Ring und Querhauptbohrung eingehalten werden, gelangt der geteilte Ring bei diesem leichten Anziehen des Gewinderings teilweise in die Bohrung oder in eine an der Bohrungsfläche vorgesehene Umfangsausnehmung, so daß er jedenfalls in radialer Richtung fixiert ist. In axialer Richtung kann der geteilte Ring nicht bewegt werden, da er in seiner axialen Länge exakt auf die Ausnehmung abzustimmen ist.

Zum endgültigen Festziehen bzw. Vorspannen des an der Querhauptoberseite vorgesehenen Gewinderings wird der Zylinder an seine Druckzuleitungen angeschlossen und mit Druckmittel beaufschlagt, so daß der mit dem Zylinderkolben gekoppelte Messerschlitten der Schere bis zu einem Anschlag ausgefahren wird. Der Messerschlitten wird dabei mit Maximalkraft gegen den Anschlag gedrückt, so daß der geteilte Ring nach oben gedrückt und der an der Querhauptoberseite vorgesehene Gewindering ohne großen Kraftaufwand mit der für den Betrieb erforderlichen Vorspannung anzuziehen ist.

Bei der Bauweise nach dem Stand der Technik wurde die Vorspannung zum Anziehen des Gewinderings dadurch erzeugt, daß der ausgefahrene Messerschlitten mechanisch im Scherenrahmen so blockiert wurde, daß er am Rückzug gehindert war, so daß sich die hydraulische Rückzugskraft des Zylinders auf diesen in Richtung zum Messerschlitten hin auswirkte und ein Nachziehen des Gewinderings erlaubte. Diese durch die Konstruktion bedingte Verfahrensweise hatte aber den Nachteil, daß dafür nur die sogenannte « Ringkraft » des Kolbens abzüglich Kolbenstangenquerschnitt und nicht die gesamte Kolbenfläche zur Verfügung stand. Daher konnte bei der herkömmlichen Bauweise auch nur eine sehr viel geringere Vorspannkraft erzeugt werden, so daß insbesondere auch aus diesem Grunde ein Lösen der Verbindung durch Bewegungen unter extremen Scherkraftbelastungen eintreten konnte. Da die erfindungsgemäße Zylinderbefestigung unter maximalem Scherdruck vorgespannt und festgelegt wird, sind höhere Drücke bzw. dadurch hervorgerufene Kräfte von vornherein ausgeschlossen, die noch zur Beschädigung einer solchen Verbindung führen könnten.

In umgekehrter Weise wie bei der Montage kann erfindungsgemäß bei der Demontage vorgegangen werden. Zum Lösen des Gewinderings wird zunächst der Messerschlitten mit möglichst großer Kraft gegen das Widerlager gedrückt, so daß die auf den Gewindering wirkende Vorspannung erheblich vermindert wird und ein vollständiges Lösen (oder Nachspannen) des Gewinderings ohne große Schwierigkeiten möglich ist. Nach dem Herausnehmen des geteilten Rings kann der Zylinder nach oben aus der Bohrung des Querhaupts herausgezogen werden.

Anhand der schematischen Darstellung eines Ausführungsbeispiels der Erfindung werden Einzelheiten erläutert. Es zeigen :

Figur 1 eine vertikal stehende Schere im Schnitt ;

Figur 2 eine Abwandlung der Zylinderbefestigung gegenüber der Ausführungsform nach Fig. 1 ; und

Figur 3 eine Draufsicht auf die Zylinderbefestigung nach Fig. 2.

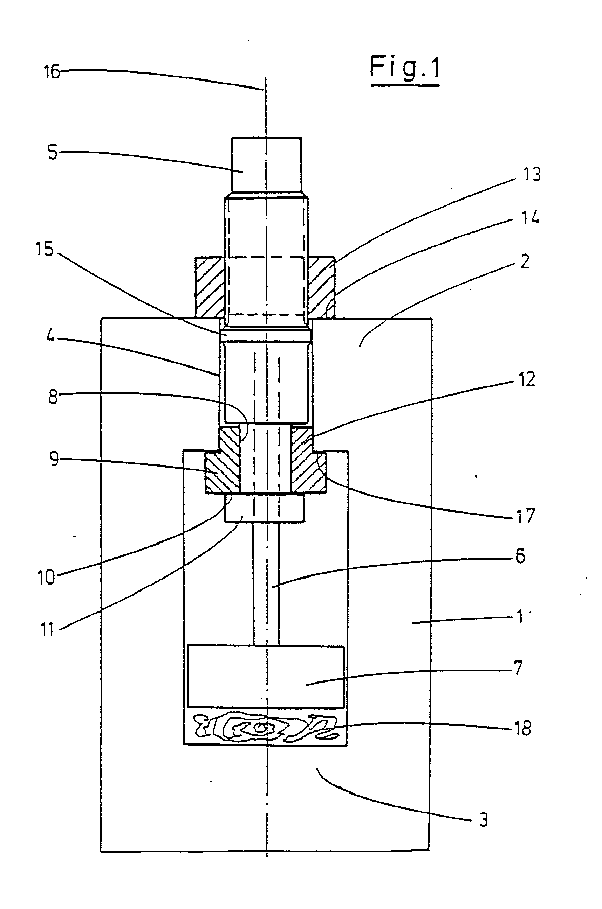

Die Schere nach Fig. 1 besteht aus einem Ständer bzw. Rahmen 1 mit Querhaupt 2 und dem im Unterteil des Rahmens angeordneten, feststehenden Gegenmesser 3 sowie aus dem in einer Bohrung 4 des Querhaupts 2 fixierten Scherzylinder 5 mit zugehörigem Kolben 6 und von diesem angetriebenen Messerschlitten 7. In der gezeichneten Blickrichtung hinter oder vor dem Scherzylinder 5 befindet sich jeweils ein ebenfalls in einer Bohrung des Querhaupts 2 fixierter Zylinder mit Kolben zum Antrieb eines Niederhalters. Die Elemente 4 bis 7 sind, abgesehen von der Dimension, für den Scherzylinder und den Niederhalterzylinder im Prinzip identisch aufgebaut. Ähnliches gilt für die nachfolgend beschriebene Fixierung des jeweiligen Zylinders, die am Beispiel der Scherzylinderfixierung erläutert wird.

Der Scherzylinder 5 gemäß dem Ausführungsbeispiel besitzt in seiner Oberfläche eine umlaufende Ausnehmung 8, die bei gespanntem bzw. fixiertem Zylinder 5 teilweise in die Bohrung 4 des Querhaupts 2 hineinragt. In die Ausnehmung 8 wird ein (erster), z. B. hälftig, geteilter Ring 9 eingesetzt, der sich auf der unteren Schulter 10 der Ausnehmung 8 bzw. auf dem daran unten anschließenden Bund 11 des Zylinders 5 abstützt. Der geteilte Ring 9 besitzt nach oben hin einen angedrehten Bund 12, der praktisch denselben Außendurchmesser wie die Bohrung 4 hat und daher zugleich dem radialen Fixieren des geteilten Rings 9 und dem Zentrieren des Zylinders 5 dient.

Während der geteilte Ring 9 auf der Unterseite des Querhaupts 2 zum Abfangen der vom Messerschlitten 7 ausgehenden, von unten nach oben gerichteten Reaktionskräfte ausgelegt wird, dient oberhalb des Querhaupts 2 ein auf den Umfang des Zylinders 5 aufgeschraubter Gewindering 13 zum Aufnehmen der von oben nach unten gerichteten Kräfte, also insbesondere des Gewichts des Zylinders 5 mit Messerschlitten 7. Der Gewindering 13 liegt flach, vorzugsweise mit ebener Stirnfläche 14, im Bereich um die Bohrung 4 des Querhaupts 2 auf diesem auf. Wegen der glatten Auflagefläche kann an dieser Stelle ein Verkeilen oder Verklemmen nicht eintreten. Falls hier eine besondere Zentrierung erforderlich ist, kann der Zylinderumfang mit einer entsprechenden Passung 15 versehen werden. Stattdessen kann auch der Gewindering 13 einen in die Bohrung 4 ragenden Zentrieransatz besitzen.

Beim Montieren wird der Zylinder 5, ausgerichtet auf die Längsachse 16 der Bohrung 4, vertikal von oben in die Bohrung eingeführt, bis die Ausnehmung 8 ganz auf der Unterseite des Querhaupts 2 aus der Bohrung hervortritt. Daraufhin wird der (erste) geteilte Ring 9 von den Seiten her in die Ausnehmung 8 eingelegt und der Zylinder 5 leicht angehoben, so daß der an den geteilten Ring 9 angedrehte Bund 12 in die Bohrung 4 gelangt und der geteilte Ring mit seiner oberen Schulter 17 an der Unterseite des Querhaupts 2 anliegt. Der Ring 9 ist dann in axialer und radialer Richtung fixiert. Anschließend wird der Gewindering 13 auf der Oberseite des Querhaupts 2 soweit angezogen, daß der Bund 12 des geteilten Rings 9 zumindest teilweise in der Bohrung 4 verbleibt. Dann werden die Druckzuleitungen am Zylinder 5 angebracht und dieser wird so beaufschlagt, daß der Messerschlitten nach unten gegen ein Widerlager 18 stößt und eine entsprechende Reaktionskraft auf den Zylinder 5 damit über den geteilten Ring 9 auf das Querhaupt 2 ausübt. Unter dieser Vorspannung wird dann der Gewindering 13 weiter angezogen, so daß der Zylinder 5 in der gewünschten Weise vorgespannt fixiert wird.

Beim Demontieren des Zylinders 5 wird im wesentlichen in umgekehrter Reihenfolge wie beim Montieren vorgegangen. Das Demontieren beginnt damit, daß der Zylinder durch Beaufschlagen wie beim Scheren mit äußerster Kraft nach oben gedrückt wird, so daß der Gewindering 13 zu lösen ist. Daraufhin wird der Zylinder 5 soweit abgesenkt, daß die Einzelteile des geteilten Rings 9 aus der Ausnehmung 8 herauszunehmen sind. Schließlich wird der Zylinder 5 — nach Abkoppeln des Messerschlittens 7 — in vertikaler Richtung 16 vollständig aus der Bohrung 4 herausgezogen.

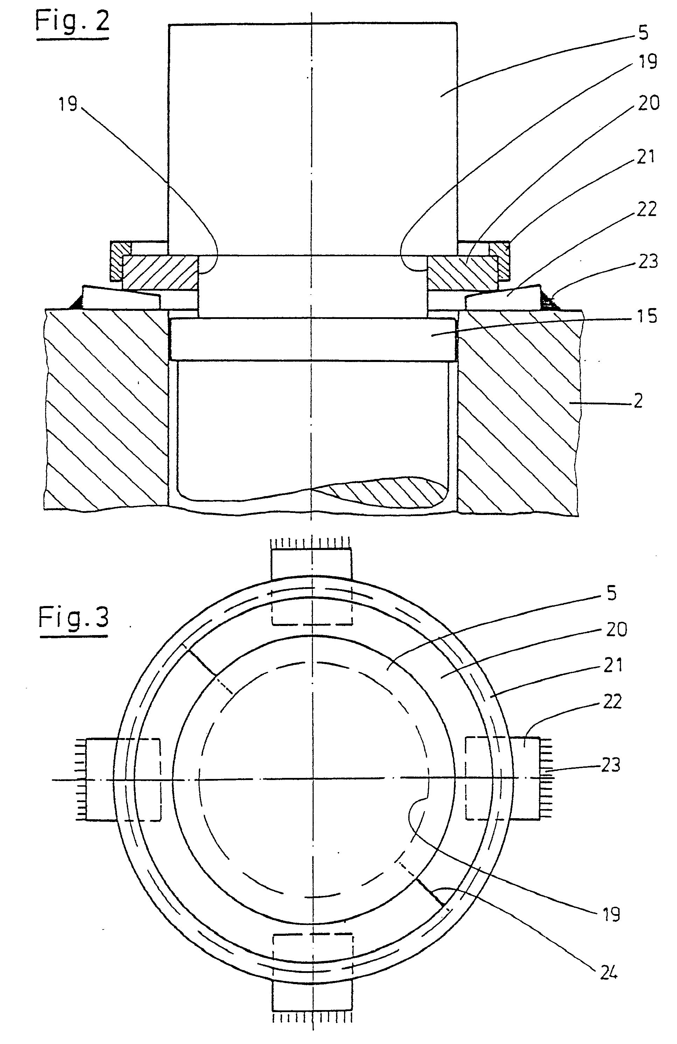

Wie bereits erwähnt, kann der Zylinder 5 auf der dem Messerschlitten 7 gegenüberliegenden Oberseite des Querhaupts 2 nicht nur durch den Gewindering 13 sondern stattdessen auch durch andere Feststellmittel, z. B. mit Hilfe eines in eine zweite Ausnehmung 19 einzusetzenden, zweiten geteilten Rings 20 nach Fig. 2 und 3 unter Vorspannung festgelegt werden. Der zweite geteilte Ring 20 wird dabei zweckmäßig mit Hilfe eines einteiligen Bandagerings 21 zusammengehalten. Die Montage des zweiten geteilten Rings 20 erfolgt wiederum unter Vorspanndruck mit Hilfe radial einzutreibender Keile 22, die, um ein Lösen oder Lockern auszuschließen, beispielsweise mit einer Schweißnaht 23 festgelegt werden können. Wenn die Vorspannung mit der maximalen Zylinderkraft erzeugt wird, können keine noch höheren Betriebskräfte auftreten, die diese Verbindung bei sachgemäßer Montage lösen könnten, so daß eine Nachspannmöglichkeit nicht erforderlich ist. Fig. 3 zeigt eine Draufsicht auf den Kopf des Zylinders 5 für den Fall, daß vier Keile 22 zur Aufnahme der Vorspannung des Zylinders dienen. Aus Fig. 3 gehen auch die gegenseitige Zuordnung von geteiltem Ring 20 und Bandagering 21 sowie die Teilfuge 24 des geteilten Rings hervor.

**Patentansprüche**

1. Schere für Material beliebiger Art, zum Beispiel Schrott, Schutt, Müll, Knüppel, Stränge oder dgl., mit in einem geschlossenen Rahmen (1) geführtem Messerschlitten (7) und ggf. Niederhalter sowie je einem zugehörigen, aus einer in einer Bohrung (4) des zylinderseitigen Rahmen-Querhaupts (2) unter Vorspannung fixierten Zylinder-Kolben-Anordnung bestehenden Antrieb, dadurch gekennzeichnet, daß jeder im Querhaupt (2) fixierte Zylinder (5) gegenüber vom Messerschlitten (7) zum Querhaupt gerichteten Kräften durch einen in eine umlaufende Ausnehmung (8) der Zylinderoberfläche sowie wenigstens zum Teil in die dem Messerschlitten (7) zugewandte Querhauptseite eingreifenden, ersten geteilten Ring (9) an der dem Messerschlitten zugewandten Seite des Querhaupts (2) fest abgestützt ist und daß der oder jeder Zylinder (5) auf der dem Messerschlitten (7) abgewandten Seite des Querhaupts (2) unter Vorspannung festgelegt ist.

2. Schere nach Anspruch 1, dadurch gekennzeichnet, daß der Zylinder (5) an der dem Messerschlitten (7) abgewandten Seite des Querhaupts (2) mit Hilfe eines auf den Zylinderumfang aufgeschraubten Gewinderings (13) abgestützt ist.

3. Schere nach Anspruch 1 oder 2, dadurch gekennzeichnet, daß die Ausnehmung (8) der Oberfläche des Zylinders (5) zum Teil in die Bohrung (4) des Querhaupts (2) hineinragt, und daß der erste geteilte Ring (9) einen in die Bohrung (4) hineinreichenden, abgesetzten Bund (12) besitzt.

4. Schere nach Anspruch 3, dadurch gekennzeichnet, daß der Bund (12) des ersten geteilten Rings (9) als Zentrieransatz ausgebildet ist.

5. Schere nach einem oder mehreren der Ansprüche 1 bis 4, dadurch gekennzeichnet, daß der erste geteilte Ring (9) vollständig im Querhaupt (2) eingelassen ist.

6. Schere nach einem oder mehreren der Ansprüche 2 bis 5, dadurch gekennzeichnet, daß der auf der dem Messerschlitten (7) abgewandten Seite des Querhaupts (2) auf den Zylinder (5) aufgeschraubte Gewindering (13) mit seiner unteren Stirnfläche (14) flach auf dem Querhaupt (2) aufliegt, und daß der Zylinder (5) in diesem Bereich über eine Passung (15) an seinem .Umfang in der Bohrung (4) des Querhaupts (2) zentriert ist.

7. Schere nach Anspruch 1, dadurch gekennzeichnet, daß der Zylinder (5) an der dem Messerschlitten (7) abgewandten Seite des Querhaupts (2) mit Hilfe eines in eine zweite umlaufende Ausnehmung (19) der Zylinderoberfläche eingreifenden, zweiten geteilten Rings (20) abgestützt ist (Fig. 2).

8. Schere nach Anspruch 1 und 7, dadurch gekennzeichnet, daß der zweite geteilte Ring (20) mit Hilfe eines einteiligen Bandagerings (21) zusammengehalten ist.

9. Schere nach einem oder mehreren der Ansprüche 1, 7 oder 8, dadurch gekennzeichnet, daß zwischen Querhaupt (2) und zweitem geteilten Ring (20) Keile (22) oder dgl. bei unter Vorspannung gehaltenem Zylinder (5) radial eingetrieben und gegen Lösen oder Lockern, insbesondere durch eine Schweißnaht (23), festgelegt sind.

**Claims**

1. Shears for material of any kind, for example scrap, refuse, waste, billets, strands or the like, comprising knife slide (7) and, possibly also, holding-down device guided in a closed frame (1), and also a drive associated with each, consisting of a piston-cylinder assembly fixed with prestress in a bore (4) of the frame crosshead (2) nearest the cylinder, characterized in that each cylinder (5) fixed in the crosshead (2) is supported, with respect to forces oriented from the knife slide (7) towards the crosshead, firmly against the side of the crosshead (2) facing towards the knife slide by a first divided ring (9), engaging into a circumferential recess (8) of the cylinder surface and also at least partly into the side of the crosshead facing towards the knife slide (7), and that the cylinder or each cylinder (5) is secured with prestress on the side of the crosshead (2) remote from the knife slide (7).

2. Shears according to claim 1, characterized in that the cylinder (5) is supported, at the side of the crosshead (2) remote from the knife slide (7), by means of a threaded ring (13) screwed onto the cylinder circumference.

3. Shears according to claim 1 or 2, characterized in that the recess (8) in the surface of the cylinder (5) penetrates partly into the bore (4) of the crosshead (2), and that the first divided ring (9) possesses a set-back shoulder (12) penetrating into the bore (4).

4. Shears according to claim 3, characterized in that the shoulder (12) of the first divided ring (9) is constructed as a centering projection.

5. Shears according to one or more of claims 1 to 4, characterized in that the first divided ring (9) is recessed completely into the crosshead (2).

6. Shears according to one or more of claims 2 to 5, characterized in that the threaded ring (13), screwed onto the cylinder (5) on the side of the crosshead (2) remote from the knife slide (7), bears with its lower end face (14) flat upon the crosshead (2), and that the cylinder (5) is centered, in this region, by a fit (15) at its periphery in the bore (4) of the crosshead (2).

7. Shears according to claim 1, characterized in that the cylinder (5) is supported, at the side of the crosshead (2) remote from the knife slide (7), by means of a second divided ring (20), engaging into a second circumferential recess (19) of the cylinder surface (Fig. 2).

8. Shears according to claims 1 and 7, characterized in that the second divided ring (20) is held together by means of a single-piece banding ring (21).

9. Shears according to one or more of claims 1, 7 or 8, characterized in that, between crosshead (2) and second divided ring (20), wedges (22) or the like are driven radially inwards while the cylinder (5) is held under prestress and are secured against loosening or shaking out, especially by a weld seam (23).

## Revendications

1. Cisaille pour matériels de toute nature tels que, par exemple, les ferrailles, les matériaux en vrac, les ordures, les billettes, les barres ou les objets analogues, qui comporte un chariot porte-lame (7) guidé dans un cadre fermé (1) et, le cas échéant, un presse-tôle ainsi qu'un dispositif de commande correspondant, constitué par un ensemble cylindre-piston fixé sous précontrainte dans un alésage (4) de la traverse (2) du cadre située du côté du cylindre, caractérisée en ce que chaque cylindre (5) fixé dans la traverse (2) prend appui, pour absorber les efforts exercés sur la traverse (2) par le chariot porte-lame (7) sur le côté de la traverse (2) qui regarde le chariot porte-lame, sur une première bague divisée (9) qui pénètre dans un évidement périphérique (8) de la surface du cylindre et, au moins en partie, dans le côté de la traverse qui regarde le chariot porte-lame (7) et en ce que le ou les cylindres (5) sont fixés sous précontrainte sur le côté de la traverse (2) qui regarde du côté opposé au chariot porte-lame (7).

2. Cisaille selon la revendication 1, caractérisée en ce que le cylindre (5) prend appui sur le côté de la traverse (2) qui regarde du côté opposé au chariot porte-lame (7) par l'intermédiaire d'une bague filetée (13) vissée sur la périphérie du cylindre.

3. Cisaille selon l'une des revendications 1 ou 2, caractérisée en ce que l'évidement (8) de la surface du cylindre (5) pénètre en partie dans l'alésage (4) de la traverse (2) et en ce que la première bague divisée (9) comporte un rebord (12) décalé qui pénètre dans l'alésage (4).

4. Cisaille selon la revendication 3, caractérisée en ce que le rebord (12) de la première bague divisée (9) a la forme d'une partie de centrage.

5. Cisaille selon l'une des revendications 1 à 4, caractérisée en ce que la première bague divisée (9) pénètre complètement dans la traverse (2).

6. Cisaille selon l'une des revendications 2 à 5, caractérisée en ce que la bague filetée (13) qui est vissée sur le côté de la traverse (2) qui regarde du côté opposé au chariot porte-lame (7) s'applique à plat, par sa surface frontale inférieure (14), sur la traverse (2) et en ce que, dans cette zone, le cylindre (5) est centré par un dispositif d'adaptation (15), au niveau de la périphérie, dans l'alésage (4) de la traverse (2).

7. Cisaille selon la revendication 1, caractérisée en ce que le cylindre (5) prend appui sur le côté de la traverse (2) qui regarde du côté opposé au chariot porte-lame (7) par l'intermédiaire d'une deuxième bague divisée (20) qui s'engage dans un deuxième évidement périphérique (19) de la surface du cylindre.

8. Cisaille selon l'une des revendications 1 ou 7, caractérisée en ce que la deuxième bague divisée (20) est maintenue par une bague de bandage (21) d'une seule pièce.

9. Cisaille selon l'une des revendications 1, 7 ou 8, caractérisée en ce qu'entre la traverse (2) et la deuxième bague divisée (20) des coins (22) ou des dispositifs analogues sont introduits dans le sens radial pendant que le cylindre (5) est maintenu sous précontrainte et sont fixés, notamment par un cordon de soudure (23) de manière à ne pas pouvoir se détacher.

Fig.1

Fig. 2

Fig. 3

2